# EUROPÄISCHE PATENTSCHRIFT

(11) **EP 2 943 426 B1**
(45) Veröffentlichungstag und Bekanntmachung des Hinweises auf die Patenterteilung: **11.01.2017**
(21) Anmeldenummer: 13801502.9
(22) Anmeldetag: 27.11.2013
(51) Int. Cl.: B65H 3/08, B65G 47/91, B65H 5/10

(54) **VORRICHTUNG ZUM ENTNEHMEN VON PLATTENFÖRMIGEN ELEMENTEN, INSBESONDERE VON PAPPENZUSCHNITT**
DEVICE FOR REMOVING PLATE-SHAPED ELEMENTS, IN PARTICULAR CARDBOARD BLANKS
DISPOSITIF POUR ENLEVER DES ÉLÉMENTS EN FORME DE PLAQUE, EN PARTICULIER DES DÉCOUPES EN CARTON

(30) Priorität: 08.01.2013 DE 102013200146
(43) Veröffentlichungstag der Anmeldung: 18.11.2015
(73) Patentinhaber: Robert Bosch GmbH, 70442 Stuttgart (DE)
(72) Erfinder: SIPPLE, Michael, 74417 Gschwend (DE); VAIHINGER, Bernhard, 71384 Weinstadt (DE); NISSLER, Ulrich, 71384 Weinstadt (DE)
(86) Internationale Anmeldenummer: PCT/EP2013/074814
(87) Internationale Veröffentlichungsnummer: WO 2014/108243

(56) Entgegenhaltungen:
- EP-A1- 1 394 049
- EP-A1- 2 492 224
- WO-A1-2011/015610
- WO-A2-2006/059192

## Beschreibung

### Stand der Technik

Die vorliegende Erfindung betrifft eine Vorrichtung zum Entnehmen von plattenförmigen Elementen. Insbesondere dient die Vorrichtung zum Entnehmen von Zuschnitt aus Vollpappe oder Wellpappe. Die plattenförmigen Elemente werden dabei aus einem Magazin entnommen und zur weiteren Verarbeitung abgelegt.

Die Druckschrift US 2001/0023227 A1 zeigt eine vorbekannte Vorrichtung zum Entnehmen von Pappenzuschnitten. Die Zuschnitte werden dabei aus der vertikalen Stellung aufgenommen, nach oben angehoben und dabei in eine horizontale Lage gedreht. Die vorbekannte Anordnung ist komplex aufgebaut.

WO2011/015610 A1 offenbart eine Vorrichtung gemäß dem Oberbegriff des Anspruchs 1.

### Offenbarung der Erfindung

Die erfindungsgemäße Vorrichtung mit den Merkmalen des Anspruchs 1 ermöglicht ein Entnehmen von plattenförmigen Elementen, insbesondere von Pappenzuschnitten, wobei die Vorrichtung nur einen Antrieb benötigt und somit einfach herstellbar ist und wartungsarm betrieben werden kann. Die erfindungsgemäße Vorrichtung ermöglicht es, vertikal stehende plattenförmige Elemente aufzunehmen und in einer horizontalen Lage wieder abzulegen. Die plattenförmigen Elemente können dabei auf einem Niveau abgelegt werden, das höher liegt als eine Unterkante der plattenförmigen Elemente beim Aufnehmen. Durch die erfindungsgemäße Anordnung der unterschiedlichen Hebel ist der gesamte Bewegungsablauf mit nur einem Antrieb realisierbar. Das Entnehmen der plattenförmigen Elemente und das Drehen in die horizontale Lage erfolgt ohne einer Berührung der noch im Magazin befindlichen plattenförmigen Elemente. Durch die relativ hohe Ablageposition ergibt sich eine ergonomisch günstige Lage für die weitere Verarbeitung. All diese Vorteile werden erreicht durch die erfindungsgemäße Vorrichtung zum Entnehmen von plattenförmigen Elementen, umfassend eine Trägervorrichtung und eine auf der Trägervorrichtung angeordnete Haltevorrichtung zum Halten des plattenförmigen Elementes. Des Weiteren ist ein Antrieb mit einer angetriebenen Welle vorgesehen. Auf der angetriebenen Welle ist ein erster Hebel drehfest angeordnet. Mit dem ersten Hebel und mit der Trägervorrichtung ist ein zweiter Hebel drehbar verbunden. Ein vierter Hebel ist um einen Fixpunkt drehbar angeordnet. Der vierte Hebel ist mit der Trägervorrichtung drehbar verbunden. Des Weiteren ist ein dritter Hebel vorgesehen. Der dritte Hebel ist drehbar mit dem ersten Hebel und drehbar mit dem vierten Hebel verbunden. Lediglich durch die Rotation der angetriebenen Welle können die Hebel in Bewegung gesetzt werden. Durch die erfindungsgemäße Anordnung der Hebel bewegt sich die Trägervorrichtung samt der Haltevorrichtung aus der vertikalen Lage in die horizontale Lage. Dabei erfolgt ein Anheben des aufgenommenen plattenförmigen Elementes, so dass die Unterkante des plattenförmigen Elementes in seiner Endposition höher liegt als in der Ausgangsposition. Die erfindungsgemäße Vorrichtung wird insbesondere zum Entnehmen von Pappenzuschnitten aus einem Magazin verwendet.

Die Unteransprüche zeigen bevorzugte Weiterbildungen der Erfindung.

Bevorzugt ist vorgesehen, dass die Haltevorrichtung zumindest einen Greifer und/oder zumindest einen Sauger umfasst. Mit dem Greifer oder Sauger kann das plattenförmige Element an der Haltevorrichtung fixiert werden.

Die drehbaren Verbindungen zwischen den einzelnen Elementen werden als "Anbindungspunkte" bezeichnet. Der zweite Hebel ist an einem ersten Anbindungspunkt mit dem ersten Hebel verbunden. Der dritte Hebel ist an einem zweiten Anbindungspunkt mit dem ersten Hebel verbunden. Bevorzugt ist vorgesehen, dass die Welle zwischen dem ersten und zweiten Anbindungspunkt angeordnet ist. So wird bei einer Rotation der Welle der erste Anbindungspunkt beispielsweise abgesenkt und gleichzeitig der zweite Anbindungspunkt angehoben.

Des Weiteren ist vorgesehen, dass der dritten Hebel an einem dritten Anbindungspunkt mit dem vierten Hebel verbunden ist. Die Trägervorrichtung ist an einem vierten Anbindungspunkt mit dem vierten Hebel verbunden. Der Fixpunkt ist zwischen dem dritten und vierten Anbindungspunkt angeordnet.

Die Anordnung eines Elementes zwischen zwei Anbindungspunkten bedeutet nicht, dass dieses Element, beispielsweise die Welle oder der Fixpunkt, exakt auf einer Linie zwischen den beiden Anbindungspunkten liegen muss. Letztendlich ist es ausreichend, dass ein Winkel zwischen einer imaginären Linie von der Welle zum ersten Anbindungspunkt und einer imaginären Linie von der Welle zum zweiten Anbindungspunkt größer 90° ist. Ebenso ist bevorzugt der Winkel zwischen einer imaginären Linie vom dritten Anbindungspunkt zum Fixpunkt und einer imaginären Linie vom vierten Anbindungspunkt zum Fixpunkt größer 90°.

In einer bevorzugten Variante ist ein fünfter Hebel vorgesehen. Der fünfte Hebel ist drehbar mit dem dritten Hebel und drehbar mit der Haltevorrichtung verbunden. Die Haltevorrichtung ist dabei auf der Trägervorrichtung linearbeweglich geführt. Mittels des fünften Hebels wird die Haltevorrichtung gegenüber der Trägervorrichtung linear bewegt, so dass ein Anheben des plattenförmigen Elementes erfolgt. Dabei ist bevorzugt vorgesehen, dass der fünfte Hebel zwischen dem zweiten und dritten Anbindungspunkt mit dem dritten Hebel verbunden ist.

Alternativ zur Verwendung des fünften Hebels ist es auch möglich, die Haltevorrichtung fest mit der Trägervorrichtung zu verbinden. Dadurch vereinfacht sich der Aufbau. Bei dieser Variante muss jedoch beachtet werden, dass das plattenförmige Element nicht so weit angehoben wird, wie bei der Verwendung des fünften Hebels.

Die Drehachsen der Welle und aller verwendeter Hebel sind bevorzugt parallel zueinander, und vorzugsweise horizontal, ausgerichtet.

Der Fixpunkt ist insbesondere fix gegenüber der angetriebenen Welle.

Die gesamte Vorrichtung steht bevorzugt auf einem Sockel. Bevorzugt ist der Antrieb in diesen Sockel integriert.

Des Weiteren ist bevorzugt vorgesehen, dass die Hebel der Vorrichtung dazu ausgebildet sind, um das plattenförmige Element aus einer ersten Position (auch: Ausgangsposition oder Magazin) zu entnehmen und in einer zweiten Position abzulegen, wobei das plattenförmige Element in der ersten Position vertikal steht und wobei das plattenförmige Element in der zweiten Position horizontal liegt. Die vertikale und horizontale Lage sind jeweils mit einer Abweichung bis zu ± 20° zu sehen. Vorzugsweise sind die plattenförmigen Elemente in der ersten Position um 10° ± 5° zur Vorrichtung hin geneigt. Die Lage des plattenförmigen Elementes, insbesondere die Lage der Unterkante, in der zweiten Position ist höher als die Lage der Unterkante des plattenförmigen Elementes in der ersten Position.

### Kurze Beschreibung der Zeichnungen

Nachfolgend wird ein Ausführungsbeispiel der Erfindung unter Bezugnahme auf die begleitende Zeichnung im Detail beschrieben. Dabei zeigen:
Figur 1 eine isometrische Ansicht einer erfindungsgemäßen Vorrichtung mit einem plattenförmigen Element gemäß einem Ausführungsbeispiel,
Figur 2 einen ersten Zustand der erfindungsgemäßen Vorrichtung gemäß dem Ausführungsbeispiel,
Figur 3 einen zweiten Zustand der erfindungsgemäßen Vorrichtung gemäß dem Ausführungsbeispiel, und
Figur 4 einen dritten Zustand der erfindungsgemäßen Vorrichtung gemäß dem Ausführungsbeispiel.

### Ausführungsform der Erfindung

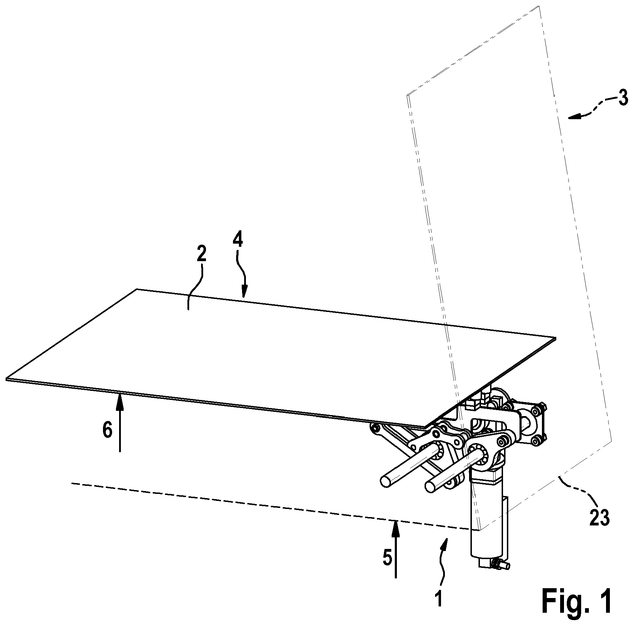

Im Folgenden wird anhand der Figuren 1 bis 4 eine Vorrichtung 1 zum Entnehmen von plattenförmigen Elementen 2, ausgebildet als Pappenzuschnitte, gezeigt.

Figur 1 zeigt die Vorrichtung 1 mit dem plattenförmigen Element 2. Das plattenförmige Element 2 befindet sich zunächst in einer ersten Position 3, beispielsweise einem Magazin. In der ersten Position 3 sind die plattenförmigen Elemente 2 annähernd vertikal angeordnet. Die Vorrichtung 1 entnimmt die plattenförmigen Elemente 2 einzeln aus der ersten Position 3 und befördert sie zu einer zweiten Position 4. Dabei erfolgt sowohl ein Drehen als auch ein Anheben der plattenförmigen Elemente 2. In der ersten Position 3 liegt eine Unterkante 23 des plattenförmigen Elementes 2 auf einer ersten Höhe 5. In der zweiten Position 4 liegt die Unterkante 23, insbesondere das gesamte plattenförmige Element 2, auf einer zweiten Höhe 6. Die zweite Höhe 6 ist höher als die erste Höhe 5.

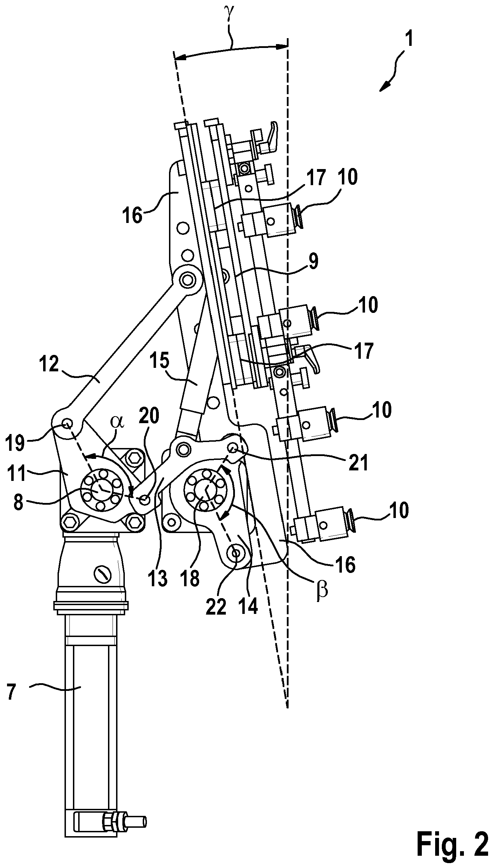

Figur 2 zeigt die Vorrichtung 1 im Detail. Die Vorrichtung 1 befindet sich dabei in einer Stellung zum Aufnehmen der plattenförmigen Elemente 2 aus der ersten Position 3. In Figur 2 ist ein Winkel γ von ca. 10° eingezeichnet, um den die plattenförmigen Elemente in der ersten Position 3 zur Vorrichtung 1 hin geneigt sind.

Die Vorrichtung 1 umfasst einen Antrieb 7. Der Antrieb 7 treibt eine Welle 8 an. Des Weiteren ist eine Trägervorrichtung 16 vorgesehen. Auf dieser Trägervorrichtung 16 ist eine Haltevorrichtung 9 montiert. Die Haltevorrichtung 9 ist dabei mittels einer Linearführung 17 linearbeweglich gegenüber der Trägervorrichtung 16. An der Haltevorrichtung 9 sind mehrere Sauger 10 angeordnet. Die Sauger 10 dienen zum Halten der plattenförmigen Elemente 2.

Auf der Welle 8 ist ein erster Hebel 11 drehfest angeordnet. Der erste Hebel 11 ist mit einem zweiten Hebel 12 und mit einem dritten Hebel 13 drehbar verbunden. Der zweite Hebel 12 ist des Weiteren mit der Trägervorrichtung 16 drehbar verbunden. Der dritte Hebel 13 ist mit einem vierten Hebel 14 drehbar verbunden.

Der vierte Hebel 14 ist um einen Fixpunkt 18 drehbar gelagert. Der Fixpunkt 18 ist dabei fix gegenüber der Welle 8. Des Weiteren ist der vierte Hebel 14 drehbar mit der Trägervorrichtung 16 verbunden.

Die Verbindung zwischen dem ersten Hebel 11 und dem zweiten Hebel 12 wird als erster Anbindungspunkt 19 bezeichnet. Der dritte Hebel 13 ist an einem zweiten Anbindungspunkt 20 mit dem ersten Hebel 11 verbunden. Die Welle 8 ist zwischen dem ersten Anbindungspunkt 19 und dem zweiten Anbindungspunkt 20 angeordnet, so dass bei einem Drehen der Welle 8 der erste Anbindungspunkt 19 beispielsweise abgesenkt und gleichzeitig der zweite Anbindungspunkt 20 angehoben wird.

Der dritte Hebel 13 ist mit einem Ende mit dem ersten Hebel 11 verbunden. An dem anderen Ende des dritten Hebels 13 befindet sich ein dritter Anbindungspunkt 21 als Verbindung zwischen dem dritten Hebel 13 und dem vierten Hebel 14. Der vierte Hebel 14 ist an einem vierten Anbindungspunkt 22 mit der Trägervorrichtung 16 verbunden. Der Fixpunkt 18 ist zwischen dem dritten Anbindungspunkt 21 und dem vierten Anbindungspunkt 22 angeordnet.

Die Welle 8 ist zwischen dem ersten und zweiten Anbindungspunkt 19, 20 angeordnet ist. Der Fixpunkt 18 ist zwischen dem dritten und vierten Anbindungspunkt 21, 22 angeordnet. Die Anordnung eines Elementes zwischen zwei Anbindungspunkten bedeutet nicht, dass dieses Element, beispielsweise die Welle 8 oder der Fixpunkt 18, exakt auf einer Linie zwischen den beiden Anbindungspunkten liegen muss. Letztendlich ist es ausreichend, dass ein erster Winkel α zwischen einer imaginären Linie von der Welle 8 zum ersten Anbindungspunkt 19 und einer imaginären Linie von der Welle 8 zum zweiten Anbindungspunkt 20 größer 90° ist. Ebenso ist bevorzugt ein zweiter Winkel β zwischen einer imaginären Linie vom dritten Anbindungspunkt 21 zum Fixpunkt 18 und einer imaginären Linie vom vierten Anbindungspunkt 22 zum Fixpunkt 18 größer 90°.

Des Weiteren ist ein fünfter Hebel 15 vorgesehen. Der fünfte Hebel 15 ist mit einem Ende drehbar mit der Haltevorrichtung 9 verbunden. Das andere Ende des fünften Hebels 15 ist drehbar mit dem dritten Hebel 13 verbunden.

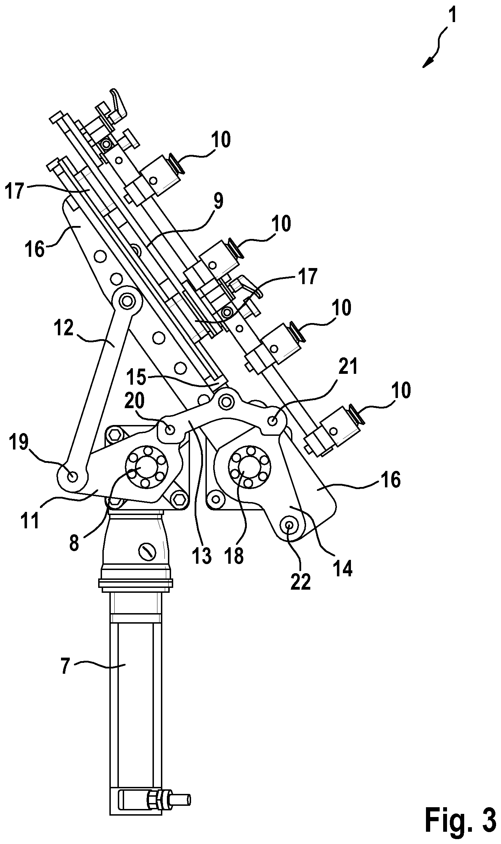

Figur 3 zeigt die Vorrichtung 1 in einer Zwischenstellung, zwischen der ersten Position 3 und der zweiten Position 4.

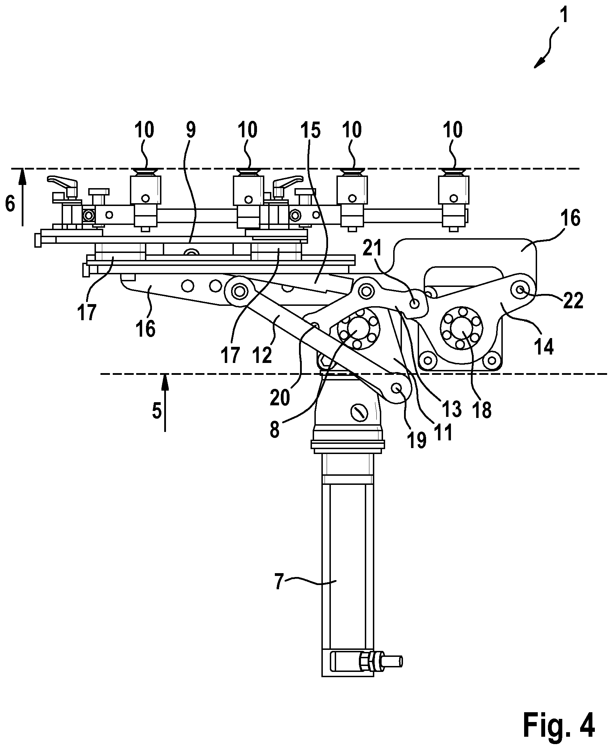

Figur 4 zeigt die Vorrichtung 1 an der zweiten Position 4.

Ausgehend von der Stellung in Figur 2 wird die Welle 8 gegen den Uhrzeigersinn gedreht. Dadurch zieht der zweite Hebel 12 den oberen Teil der Trägervorrichtung 16 nach links. Gleichzeitig wird der dritte Hebel 13 und der vierte Hebel 14 im Uhrzeigersinn gedreht. Dadurch bewegt sich der untere Teil der Trägervorrichtung 16 nach links. Somit ergibt sich für die Trägervorrichtung 16 und die darauf mit der Linearführung angeordnete Haltevorrichtung 9 eine Bewegung nach links. Dadurch ist es möglich, dass in der ersten Position 3 ein einzelnes plattenförmiges Element 2 von den verbleibenden plattenförmigen Elementen im Magazin weggehoben werden kann.

Durch eine weitere Drehung der Welle 8 gegen den Uhrzeigersinn wird der obere Teil der Trägervorrichtung 16 nach links unten gezogen. Die Trägervorrichtung 16 kippt dabei gegen den Uhrzeigersinn ab. Dies zeigt die Darstellung in Figur 3. Gleichzeitig wird der dritte Hebel 13 nach links angehoben. Über den fünften Hebel 15 wird die Haltevorrichtung 9 nach links oben verschoben. Dadurch bewegt sich die Unterkante 23 auch nach oben links und berührt beim Abkippen nicht die noch im Magazin stehenden plattenförmigen Elemente.

Wird die angetriebene Welle 8 weiter gegen den Uhrzeigersinn gedreht, bewegt sich der erste Hebel 11 weiter über die gestreckte Lage des ersten Hebels 11 und des dritten Hebels 13 hinweg. Der vierte Hebel 14 bewegt sich gegen den Uhrzeigersinn. Damit wird der untere Teil der Trägervorrichtung 16 angehoben, während der oberen Teil der Trägervorrichtung 16 nach links unten abkippt, bis die horizontale Lage gemäß der zweiten Position 4 erreicht ist. Dies zeigt die Darstellung in Figur 4.

In der beschriebenen Ausführungsform handelt es sich um ein sieben-gliedriges Koppelgetriebe mit nur einem einzigen Antrieb.

Zur Vereinfachung der Kinematik kann auf den fünften Hebel 15 und auf die Linearführung 17 verzichtet werden. Dadurch entsteht ein fünf-gliedriges Koppelgetriebe mit nur einem Antrieb. Dabei reduziert sich die zweite Höhe 6 etwas, wobei sich der Aufbau der Vorrichtung 1 vereinfacht.

## Patentansprüche

1. Vorrichtung (1) zum Entnehmen von plattenförmigen Elementen (2), insbesondere von Pappenzuschnitt, umfassend
- eine Trägervorrichtung (16),
- eine auf der Trägervorrichtung (16) angeordnete Haltevorrichtung (9) zum Halten des plattenförmigen Elementes (2),
- einen Antrieb (7) mit einer angetriebenen Welle (8),
- einen drehfest auf der Welle (8) angeordneten ersten Hebel (11),
**gekennzeichnet durch**
- einen drehbar mit dem ersten Hebel (11) und drehbar mit der Trägervorrichtung (16) verbundenen zweiten Hebel (12),
- einen um einem Fixpunkt (18) drehbar angeordneten vierten Hebel (14), wobei der vierte Hebel (14) drehbar mit der Trägervorrichtung (16) verbunden ist, und
- einen drehbar mit dem ersten Hebel (11) und drehbar mit dem vierten Hebel (14) verbundenen dritten Hebel (13).

2. Vorrichtung nach Anspruch 1, **dadurch gekennzeichnet, dass** die Haltevorrichtung (9) zumindest einen Greifer und/oder zumindest einen Sauger (10) zum Halten des plattenförmigen Elementes (2) umfasst.

3. Vorrichtung nach einem der vorhergehenden Ansprüche, **dadurch gekennzeichnet, dass** der zweite Hebel (12) an einem ersten Anbindungspunkt (19) mit dem ersten Hebel (11) verbunden ist, und der dritte Hebel (13) an einem zweiten Anbindungspunkt (20) mit dem ersten Hebel (11) verbunden ist, wobei die Welle (8) zwischen dem ersten und zweiten Anbindungspunkt (19, 20) angeordnet ist.

4. Vorrichtung nach einem der vorhergehenden Ansprüche, **dadurch gekennzeichnet, dass** der dritte Hebel (13) an einem dritten Anbindungspunkt (21) mit dem vierten Hebel (14) verbunden ist, und die Trägervorrichtung (16) an einem vierten Anbindungspunkt (22) mit dem vierten Hebel (14) verbunden ist, wobei der Fixpunkt (18) zwischen dem dritten und vierten Anbindungspunkt (21, 22) angeordnet ist.

5. Vorrichtung nach einem der vorhergehenden Ansprüche, **gekennzeichnet durch** einen drehbar mit dem dritten Hebel (13) und drehbar mit der Haltevorrichtung (9) verbundenen fünften Hebel (15), wobei die Haltevorrichtung (9) auf der Trägervorrichtung (16) linearbeweglich geführt ist.

6. Vorrichtung nach Anspruch 5, **dadurch gekennzeichnet, dass** der fünfte Hebel (15) zwischen dem zweiten und dritten Anbindungspunkt (20, 21) mit dem dritten Hebel (13) verbunden ist.

7. Vorrichtung nach einem der Ansprüche 1 bis 4, **dadurch gekennzeichnet, dass** die Haltevorrichtung (9) fest mit der Trägervorrichtung (16) verbunden ist.

8. Vorrichtung nach einem der vorhergehenden Ansprüche, **dadurch gekennzeichnet, dass** die Drehachsen der Welle (8) und aller Hebel (11-15) parallel zueinander, und vorzugsweise horizontal, ausgerichtet sind.

9. Vorrichtung nach einem der vorhergehenden Ansprüche, **dadurch gekennzeichnet, dass** die Hebel (11-15) der Vorrichtung (1) dazu ausgebildet sind, um das plattenförmige Element (2) aus einer ersten Position (3) zu entnehmen und in einer zweiten Position (4) abzulegen, wobei das plattenförmige Element (2) in der ersten Position (3) mit einer Abweichung von +/- 20° vertikal steht, wobei das plattenförmige Element (2) in der zweiten Position (4) mit einer Abweichung von +/- 20° horizontal liegt, und wobei die Lage des plattenförmigen Elementes (2) in der zweiten Position (4) höher ist als eine Unterkante (23) des plattenförmigen Elementes (2) in der ersten Position (3).

## Claims

1. Apparatus (1) for removing plate-shaped elements (2), in particular cardboard blanks, comprising
- a carrier apparatus (16),
- a holding apparatus (9) which is arranged on the carrier apparatus (16) for holding the plate-shaped element (2),
- a drive (7) with a driven shaft (8),
- a first lever (11) which is arranged fixedly on the shaft (8) so as to rotate with it,
**characterized by**
- a second lever (12) which is connected rotatably to the first lever (11) and rotatably to the carrier apparatus (16),
- a fourth lever (14) which is arranged such that it can be rotated about a fixed point (18), the fourth lever (14) being connected rotatably to the carrier apparatus (16), and
- a third lever (13) which is connected rotatably to the first lever (11) and rotatably to the fourth lever (14).

2. Apparatus according to Claim 1, **characterized in that** the holding apparatus (9) comprises at least one gripper and/or at least one sucker (10) for holding the plate-shaped element (2).

3. Apparatus according to either of the preceding claims, **characterized in that** the second lever (12) is connected to the first lever (11) at a first attaching point (19), and the third lever (13) is connected to the first lever (11) at a second attaching point (20), the shaft (8) being arranged between the first and second attaching point (19, 20).

4. Apparatus according to one of the preceding claims, **characterized in that** the third lever (13) is connected to the fourth lever (14) at a third attaching point (21), and the carrier apparatus (16) is connected to the fourth lever (14) at a fourth attaching point (22), the fixed point (18) being arranged between the third and fourth attaching point (21, 22).

5. Apparatus according to one of the preceding claims, **characterized by** a fifth lever (15) which is connected rotatably to the third lever (13) and rotatably to the holding apparatus (9), the holding apparatus (9) being guided on the carrier apparatus (16) such that it can be moved in a linear manner.

6. Apparatus according to Claim 5, **characterized in that** the fifth lever (15) is connected to the third lever (13) between the second and third attaching point (20, 21).

7. Apparatus according to one of Claims 1 to 4, **characterized in that** the holding apparatus (9) is connected fixedly to the carrier apparatus (16).

8. Apparatus according to one of the preceding claims, **characterized in that** the rotational axes of the shaft (8) and all levers (11-15) are oriented parallel to one another and preferably horizontally.

9. Apparatus according to one of the preceding claims, **characterized in that** the levers (11-15) of the apparatus (1) are configured to remove the plate-shaped element (2) from a first position (3) and to deposit it in a second position (4), the plate-shaped element (2) standing vertically with a deviation of ±20° in the first position (3), the plate-shaped element (2) lying horizontally with a deviation of ±20° in the second position (4), and the location of the plate-shaped element (2) being higher in the second position (4) than a lower edge (23) of the plate-shaped element (2) in the first position (3).

## Revendications

1. Dispositif (1) pour enlever des éléments en forme de plaque (2), en particulier des découpes en carton, comprenant
- un dispositif de support (16),
- un dispositif de retenue (9) disposé sur le dispositif de support (16) pour retenir l'élément en forme de plaque (2),
- un entraînement (7) avec un arbre entraîné (8),
- un premier levier (11) disposé de manière solidaire en rotation sur l'arbre (8),
**caractérisé par**
- un deuxième levier (12) connecté de manière rotative au premier levier (11) et de manière rotative au dispositif de support (16),
- un quatrième levier (14) disposé de manière rotative autour d'un point fixe (18), le quatrième levier (14) étant connecté de manière rotative au dispositif de support (16), et
- un troisième levier (13) connecté de manière rotative au premier levier (11) et de manière rotative au quatrième levier (14).

2. Dispositif selon la revendication 1, **caractérisé en ce que** le dispositif de retenue (9) comprend au moins un dispositif de préhension et/ou au moins un dispositif d'aspiration (10) pour retenir l'élément en forme de plaque (2).

3. Dispositif selon l'une quelconque des revendications précédentes, **caractérisé en ce que** le deuxième levier (12) est connecté au premier levier (11) au niveau d'un premier point de liaison (19), et le troisième levier (13) est connecté au premier levier (11) au niveau d'un deuxième point de liaison (20), l'arbre (8) étant disposé entre le premier et le deuxième point de liaison (19, 20).

4. Dispositif selon l'une quelconque des revendications précédentes, **caractérisé en ce que** le troisième levier (13) est connecté au quatrième levier (14) au niveau d'un troisième point de liaison (21) et le dispositif de support (16) est connecté au quatrième levier (14) au niveau d'un quatrième point de liaison (22), le point de fixation (18) étant disposé entre le troisième et le quatrième point de liaison (21, 22).

5. Dispositif selon l'une quelconque des revendications précédentes, **caractérisé par** un cinquième levier (15) connecté de manière rotative au troisième levier (13) et de manière rotative au dispositif de retenue (9), le dispositif de retenue (9) étant guidé de manière déplaçable linéairement sur le dispositif de support (16).

6. Dispositif selon la revendication 5, **caractérisé en ce que** le cinquième levier (15) est connecté au troisième levier (13) entre le deuxième et le troisième point de liaison (20, 21).

7. Dispositif selon l'une quelconque des revendications 1 à 4, **caractérisé en ce que** le dispositif de retenue (9) est connecté fixement au dispositif de support (16).

8. Dispositif selon l'une quelconque des revendications précédentes, **caractérisé en ce que** les axes de rotation de l'arbre (8) et de tous les leviers (11-15) sont orientés parallèlement les uns aux autres, de préférence horizontalement.

9. Dispositif selon l'une quelconque des revendications précédentes, **caractérisé en ce que** les leviers (11-15) du dispositif (1) sont réalisés de manière à enlever l'élément en forme de plaque (2) d'une première position (3) et de le déposer dans une deuxième position (4), l'élément en forme de plaque (2) étant vertical dans la première position (3), avec un écart de +/- 20°, l'élément en forme de plaque (2) étant horizontal dans la deuxième position (4) avec un écart de +/-20°, et la position de l'élément en forme de plaque (2) dans la deuxième position (4) étant plus haute qu'une arête inférieure (23) de l'élément en forme de plaque (2) dans la première position (3).
